# EUROPEAN PATENT APPLICATION

(11) **EP 1 715 613 A1**
(43) Date of publication of application: **25.10.2006**
(21) Application number: 05290905.8
(22) Date of filing: 22.04.2005
(51) Int. Cl.: H04L 9/00

(54) **Method and system for securing point to point connections**

(71) Applicant: Axalto SA, 92120 Montrouge (FR)
(72) Inventor: Courtois, Nicolas, 78431 Louveciennes (FR)
(74) Representative: Cour, Pierre

(57) **Abstract**

The method according to the present invention concerns a method for securing a point to point connection consisting in using a set of tokens characterised in that it consists in providing both ends of said connection with said tokens for both of which the user knows they comprise corresponding cryptographic algorithms without knowing the algorithms themselves in order to secure said connection without requiring any key management.

## Description

This invention relates to a method and a system for securing point-to-point connections, and in particular communication of sensitive information between those two points.

### TECHNICAL FIELD

Security is a major asset when deploying systems of communication between pluralities of entities. Those entities share confidential information and communicate that information from one to another. During the transmission, many types of attacks allow to reveal confidential data even if encrypted. The attackers have information about the cryptographic algorithm used by the system. They gained the possibility of measurement and/or perturbation of the physical, electrical, magnetical and/or optical environment of the code execution process. All these channels, which in some way interact with secret information concealed inside the device, are side-channels. They do leak information that may allow with the knowledge of the cryptographic algorithm used, recovery of this secret information.

The most pertinent prior art for the present invention is constituted by the following US patent:
"SYSTEM AND METHOD FOR SECURING INFORMATION, INCLUDING A SYSTEM AND METHOD FOR SETTING UP A CORRESPONDENT PAIRING",
US Patent 2004/0165729A1 by Bisson et al., published on August 26, 2004.

This patent describes a security solution that is composed of two master devices called FIPS that can be for example two PCs or two portable terminals, and two slave devices called SIPS, that will typically be two hardware tokens (e.g. two smart cards). The whole security architecture of the two systems (US patent / present invention) is very different, and in fact fundamentally contrary. In the US prior patent, the security relies on both FIPS and SIPS. The method of US patent consists in pairing keys and key identifiers that reside in both hardware tokens. The encryption, more precisely the encryption key, is dependant of the identity of the receiver. The key has to be selected according to the identity of the receiver. So SIPS must contain a plurality of keys and a plurality of key identifiers and the method for securing a communication requires user authentication (username and password) and correspondent selection means.

With the present invention, we can build security on tamper-resistance only, without user attention and public-key techniques. The security is based on SIPS only, whatever are the operating conditions and security conditions external to SIPS. With the prior type of solution, at each stage, the security can be compromised, and it is hard to know where it resides. With the present invention, the security perimeter is easy to identify, as it will be explained in the following specification: it covers the two hardware tokens and nothing else.

A direct consequence of the above, and which again makes the present solution different from any existing technology, is the trustworthiness of the model, whatever is the point of view (addressing concerns and interests of several all parties, not only of the system owner or manufacturer). We will see that with the system of the present invention, the system providers and developers are deprived of their usual capacity (sometimes done on purpose, in most cases not) to compromise or decrease the user security. Even users can hardly make them less secure. The invention also has outstanding usability, and user and developer acceptability. The security of it is self-evident, and foolproof.

One of the aims of the present invention is to offer a system and a method allowing securing interaction between two devices without intervention of the sender and receiver.

Another aim of the present invention is to avoid the transmission of information to said system, information needed to secure interaction between two points of a connection, for example the identity of the user or a password from the user.

### SUMMARY OF THE INVENTION

The present invention concerns a method for securing a point to point connection consisting in using a set of tokens characterised in that it consists in providing both ends of said connection with said tokens for both of which the user knows they comprise corresponding arbitrary cryptographic algorithms without knowing the algorithms themselves in order to secure said connection without requiring any key management.

The present invention concerns also a method for securing a point to point connection consisting in using a set of tokens that embed a corresponding arbitrary cryptographic algorithm characterized in that it consists in using said tokens together at both ends of said connection in order to secure said connection without requiring any key management from a system using said set since the algorithms in both tokens match.

The present invention concerns also the set of tokens allowing to secure said point to point connection.

### BRIEF DESCRIPTION OF DRAWINGS

Other aims, advantages and characteristics of this invention will be shown when reading the following description of the method implementation according to this invention and an embodiment mode for electronic devices adapted to this implementation given as non limiting example referring to the drawings here attached in which:
- figure 1 is a schematic view of an example of realisation of a set of two manufactured tokens according to the present invention;
- figures 2a to 2c show different possible applications for the present invention ;
- figure 3 is a schematic view of an example of realisation of an electronic module designed to implement the method according to the invention.

### WAY TO EMBODY THE INVENTION

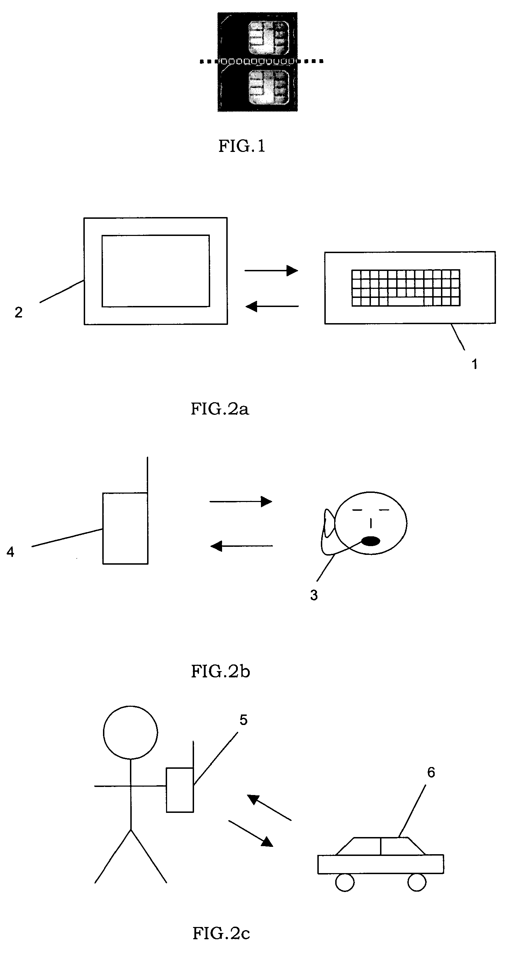

The method according to the present invention aims at securing a point-to-point connection by means of a set of two tokens, also called hereafter modules, being manufactured (figure 1), sold and/or installed together. When a user acquires a set of tokens, he knows said tokens comprise corresponding cryptographic algorithm, without knowing the algorithms themselves. The algorithms, optionally the keys and the protections (software and/or hardware protections in addition to algorithms against various types of attacks) are secret.

Said token is a hardware device, which may be for example a card with integrated circuit using a specific cryptographic process. Cards with integrated circuit also called smart cards are small plastic devices, which contain one or more embedded integrated circuits. A card with integrated circuit can be for example a wired logic card or a microprocessor card called also microprocessor chip card. A smart card is accessed with a card reader. The smart card reader covers every device used to receive or to be connected with a smart card and work with it (read, write, delete, and/or every possible operation). The meaning of the term "connect" is very general: it covers means for allowing the smart cart to transfer signals one way (from smart card to smart card reader or from smart card reader to smart card) or bidirectionally to said smart card reader in a contact or contact less mode. The smart card reader can be part or linked with a computer, a handset, a pin pad or else...and is located in the present invention at the end of a connection to secure.

In the present invention, the term token has a very large meaning and covers cards but also every portable object allowing to work or dialog with at least one portable object accepting device included at the end of a point-to-point connection to secure. The token may be for example a banking card, a SIM card, a USB token, an MMS card or any other hardware device. A point-to-point connection means a connection, which has to be made between two points between which data are transferred. The end of a point-to-point connection is one of those points. The portable object accepting device may have the form of a housing provided with an aperture or slot to receive the portable object but also any form allowing the portable object to be connected to the portable object accepting device. The portable object may for example be sold as electronic parts for soldering.

Figure 2 shows various examples of point-to-point connections:
- Figure 2a represents a wireless keyboard 1 in connection with a computer 2;
- Figure 2b represents a kit Bluetooth 3 for cell 4;
- Figure 2c represents remote control 5 for a toy car 6.

The token includes information processing means such as a processor and information storage means such as a memory. The cryptographic process is installed in the memory, for example ROM type, of said system. The processor of said system executes the process by using (or not) a unique key, stored in an area of a memory, EEPROM type for example.

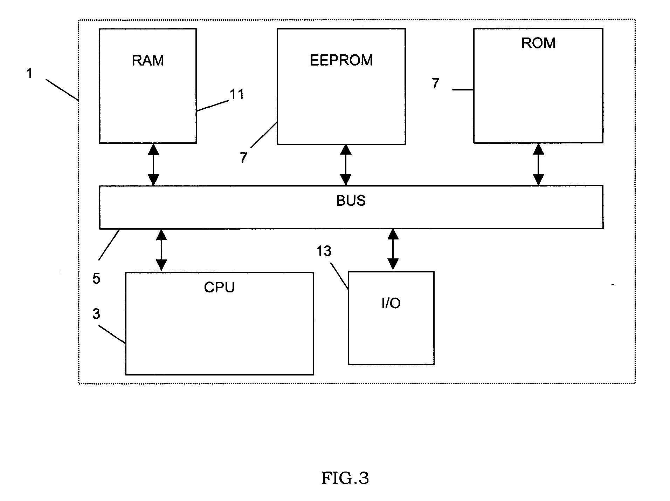

An example of token is illustrated on figure 3. The electronic token 1 comprises CPU microprocessor 3, connected bidirectionally via internal bus 5 to a non-volatile memory 7 of the ROM, EEPROM, Flash, FeRam or other type, RAM memory 11, I/O device 13 for communication with the exterior.

The object of the invention is a complete generic cryptographic security solution, that comprises a set of hardware tokens, a specific cryptographic protocol, specific security policy, as well a specific economical and trust model for deployment, build-up, promotion and self-enforcement of security solutions that include this invention.

The invention has strong and unique characteristics concerning a novel security management concept of removing this responsibility (and this possibility) from product developers.

The user retains a complete control of it and a complete freedom of exercising this control. The options of the user include the choice of key size or security level, the choice of algorithm, choice of the adequate hardware and software tamper-proof countermeasures, choice of time and place to do a secure set-up, and unrestrained possibility to keep up with security upgrades.

This user freedom should allow maximizing the user benefits by balancing in an arbitrary way the costs, global and local security concerns, national/regional/corporate regulations and policies, as well as personal choices and natural limitations.

Yet, the users cannot easily compromise their own security either.

From another point of view, one of the main advantages of the present invention is to achieve a complete separation of security and functionality. Security is entirely managed by the set of tokens and functionality by the devices in connection: said devices use said tokens to secure said connection. This separation is not achieved at all by any existing technology and is not obtained in any previously reported method of using hardware tokens to secure information systems.

The invention consists of two cryptographic modules (also called tokens) in a standard form (for example an USB token, or a SIM card). The modules are manufactured/distributed/sold, installed and/or used by two. Both tokens contain arbitrary unknown matching algorithms and optionally an arbitrary unknown key, identical in both modules, that can be accessed via a very limited standardized interface, allowing encrypting standard sized messages with an answer within standardized amount of time and/or processing any cryptographic operation as signature, checking process or else, and disallowing all other queries, manipulations, set-ups and updates. The algorithm or the couple composed of the key and the algorithm, depending on the embodiment, exists at any moment in exactly two functional copies. With this property, the development of devices that use this module is done without the possibility and without the necessity of key management and any other set-up, except the possibility for a couple of modules to be replaced, at any moment, by a new couple of modules obtained from a chosen trusted source, without rebooting the device that is using the modules.

The set of cryptographic modules embed a corresponding arbitrary cryptographic algorithm aimed at being located at each end of at least a point to point connection in order to secure said connection without requiring any key management, the user knowing that the algorithms in both modules match without knowing the algorithms themselves.

The user knows the algorithms in both modules match: one of the token does not need information from the other token in order to be sure said token works with the other. The user knows both token can be used together. The user knows the algorithm match since modules are sold, installed and/or used together. Moreover, the modules may offer a sign showing the association, as will be seen hereafter.

The expression "without requiring key management" has a large meaning: it means the token does not need to obtain information from a user (sender, receiver, ...) and/or does not have to choose a key for securing a connection and/or does not have to calculate a key and/or does not have to handle specific data and/or algorithms to choose, get or calculate a key : one or several keys may be stored in said token, the user knowing nothing from it (them). The key(s) is(are) used by the cryptographic algorithm of the token to offer a security solution, without requiring from the user or from the system using said token to manage said key : the key is secret, stored and available for any cryptographic operation handled by the token.

The sets of modules greatly differ in the level of security they offer, as well as in their speed.

Hence, the present invention offers an upgradable, user-friendly and user-trusted solution for securing point-to-point connections with paired tamper-resistant modules with neither the possibility nor the necessity of managing cryptographic keys and algorithms.

The modules can have one or several internal and/or external embodied signs showing their origin (e.g. brand name, trade mark, hologram, part number, serial number) attesting their authenticity or showing any other values as seen hereafter. Said sign may be for example printed, stuck, cut, stored ... on or in the module. Said sign may importantly explicit security credentials (expiry date, coverage by an insurance policy, replacement guarantee, warranty attached, patented algorithm and security features included, cryptographic key size, security certification level, fraud resilience methods implemented and/or tamper-resistance level, etc.). These elements allow building trust in their security and allow vendors to differentiate on security, for the same functionality. If one of the modules is inserted into a user system, and another resides at some other end of a remote connection, said sign gives the user confidence in the other module's security, fraud resilience and tamper resistance, without ever seeing the second module. Said sign may also attest of the pairing.

According to one form of realization, each of the modules works as a slave device that executes only few very basic commands and outputs the result. The term "slave" means the modules execute commands sent to them and send back the results of the commands without sending themselves commands. It has a standardized requirement to complete this computation within, say 10 ms, for single speed devices, and less for multiple speed modules that will be more expensive and may be less secure against side-channel attacks.

According to one form of realization, each token implements a cryptographic algorithm that is able to decrypt and encrypt data in 128 bits blocks (or 64 bits or any other standard block size).

According to another form of realization, one of the module encrypts, the other decrypts, both containing a similar or matching key and encryption/decryption algorithm: the user do not know any information on key and algorithms.

According to a particular form of realization, the encryption cryptographic scheme is an involution, i.e. encryption and decryption functions are identical.

The algorithm is arbitrary and is chosen by the module provider following the latest developments in cryptanalysis, their level of cryptographic expertise, government regulations and exportability issues. The cryptographic algorithms implemented can be symmetric or asymmetric, secret or not. The token comprises appropriate hardware and/or software countermeasures against side channel and perturbation attacks. The key can be a public key or a secret key solution. The key length is not specified but can be limited in some countries. The algorithm can be realized in software or implemented in wired logic and memory card, or in a microprocessor card.

The internal key can be stored in any type of non-volatile memory, and for better security should not be readable except for the execution of the encryption algorithm. It can also be a set of fuses that are directly wired into the execution of this algorithm, or a combination of aforementioned solutions, for better security.

According to a particular embodiment, the algorithm and the key are for example realized in hardware and cannot be read, except when used; during factory/user personalization of modules, fuses are blown to modify the embedded key, and no trace of this key should be kept by the manufacturer.

In the form of realization consisting in using the modules to encrypt/decrypt data transferred through the connection, two basic commands of the module are:
1. ENCRYPT: followed by 16 bytes block of data, the output is also on 16 bytes, or 128 bits. According to a particular form of realization, the encrypted text includes parity check bits.
2. DECRYPT: followed by 16 bytes, also gives 16 bytes output.

The specificity of the present invention is that there is no key involved in any command: there is no key management as seen before.

The only requirement is that the key and the ENCRYPTION and DECRYPTION functions have to match for a pair of modules.

In these conditions, according to one embodiment, one can encrypt and decrypt with both devices, but nobody is able to know/influence the choice of the key, or the choice of algorithm.

According to a particular form of realization, the modules are capable of real-time sequence generation based on external/internal clock for stream encryption.

The modules may have almost the same functionality implemented in two or more different ways. In a specific version, the algorithm and the key will not be the same in both modules; they can be different to allow distinguishing modules by a special method that may be kept secret (different circuits that provide the same or almost always the same functionality implemented in two or more different ways). This additional capacity may be used for traitor tracing or computer forensics.

The modules may also have user pre-personalization capabilities that are optional:

Two commands may be added:
3. EXECUTE_PAIRING should not be a command in slave mode, but is executed automatically when two modules are powered (e.g. by a battery) and their communication ports are simply connected together by a wire. It does not matter which of the modules will be the master here. This command executes a pairing procedure, with one module being the master the other the slave. It consists in executing a pairing procedure consisting in regenerating the key or/and the cryptographic algorithm(s) of said tokens via direct connection by cable of two modules under the control of the user and with security defined by some appropriate cryptographic mutual key agreement protocol. No usable information leaks to the third party device that would intercept the data exchanged during the connection when executing pairing.

This procedure modifies either the key, or the algorithm, or both, inside both connected modules, in such a way that their functionalities remain identical, and no usable information leaks to the third party device that would intercept the data exchanged during the connection.

Tokens are linked via direct connection by cable and the pairing procedure is under the control of the user and the security for executing said procedure is defined by some appropriate cryptographic mutual key agreement protocol.

To implement the pairing procedure, one can use Diffie-Hellman algorithm, or other public key techniques. One can also use a secret key technique based on the previous key embedded in both devices and a random generator, to create a new key. This previous key can be erased after the pairing is finished.

The pairing can take substantial time (seconds or minutes) but should be secure and may be performed by anyone, at any moment, including by the final user.

A good implementation should prevent the pairing of having any effect on the devices, unless completed to the end.

A completion should include challenge-response trial encryptions with random data, so that active attacks such as perturbing or interrupting the pairing can do no harm.

The system should remain secure as long as there is no device connected in the middle, between the pair, which would be visible to the user and can be avoided - the user will be easily convinced that this pairing was securely executed.
4. DISABLE_ONE_DIRECTION This optional command allows the device to disable once and for all (there is no going back) one of the two main functions of the device, for example encryption.

A secure implementation of this function should erase some data necessary for this function and acknowledge the completion. However if afterwards, the pairing is executed by EXECUTE_PAIRING, both directions might work again.

There is an additional instruction of asymmetric pairing which corresponds to the sequence of EXECUTE_PAIRING, and DISABLE_ONE_DIRECTION executed for each device, but in such a way that, according to some specific cryptographic protocol, and for a better security, at no moment the encryption capability resides on device 1, and at no moment the decryption capability resides on device 2.

The specification that follows shows how to use the set of tokens in a particular application:

A merchant (e.g. coffee shop) has a bankcard terminal with wireless connection to the base station that is fixed and connected to the phone socket. When the portable terminal is used to make a payment with online authorization, the credit card details, the PIN, and some discretionary data may be send via the wireless connection on which everybody can spy on. The security of this connection is crucial, and can not be assured by the company that manufactures the terminal. The credit card issuing banks do not trust the cryptographic expertise of the constructor of the terminal, want to be able to upgrade the security at any moment without replacing the terminal, and want the security of the wireless connection to be independently certified, and to conform to cryptographic regulations of a given country (while the same terminal is used in every country).

Thus another company provides two hardware modules that are inserted or soldered at both ends to insure encryption (confidentiality) and also optionally the authenticity of the point-to-point connection. In addition the terminal may also re-encrypt the communication to prevent using faulty security modules.

The same technique can be used, for example, to secure a connection between a PC and a mouse or a keyboard, at two ends of a long cable, to secure a wireless remote control, a wireless land-line phone, or between a mobile and a GSM Bluetooth handset.

The applications are various and numerous. Some are mentioned hereafter to show the large scope of the present invention and all the advantages associated:
Wireless point to point connections: kit bluetooth for cell, wireless keyboard/mouse, secure WiFi, wireless USB, remote TV, pay-TV ...
Access control: car key/beeper, detachable-face car radio, contact less keys for hotel room, PC login tokens ...

The invention is applicable each time there is a need to secure a point-to-point connection, a connection between two devices.

According to a particular embodiment, an internal counter can limit the number of queries to the modules.

### Extensions and Variants:

In addition to options already listed, there are many straightforward extensions and generalizations of this invention.

Devices can have different external forms, and be used in many different ways.

Any of the devices can have one of its functions permanently and irreversibly disabled at user's wish.

There can be more than two tokens (for example three) made at a time, but in a limited number fixed at the manufacturing or pre-personalization time. Then, it is on a later time no more possible to produce another compliant module to enlarge the set.

They may implement many different cryptographic techniques to achieve the basic functionality, but all this that should not be visible to users/ developers.

They can also implement many different known software and hardware protection techniques against wrong manipulation, active and passive intrusion and side-channel attacks.

According to a development of the present invention, the modules are able of erasure of otherwise destroying their content, if they detect intrusion or an interactive attacker.

So the present invention concerns a method for securing a point to point connection consisting in using a set of tokens characterised in that it consists in providing both ends of said connection with said tokens for both of which the user knows they comprise corresponding arbitrary cryptographic algorithms without knowing the algorithms themselves in order to secure said connection without requiring any key management.

The present invention concerns also a method for securing a point to point connection consisting in using a set of tokens that embed a corresponding arbitrary cryptographic algorithm characterized in that it consists in using said tokens together at both ends of said connection in order to secure said connection without requiring any key management from a system using said set since the algorithms in both tokens match.

The invention uses an upgradeable, user friendly and user trusted solution for securing a point-to-point connection with paired tamper resistant devices with neither the possibility neither the necessity of key generation, key management and any other set up. The set of tokens may be replaced, at any moment, by a new couple of tokens obtained from a chosen trusted source.

The method according to the present invention allows, on demand, to execute a pairing procedure consisting in regenerating the key or/and the cryptographic algorithm(s) of said tokens in such a way that their functionalities remain identical. The key or/and the cryptographic algorithm(s) of said tokens may be regenerated via direct connection by cable of two tokens under the control of the user and with the security defined by some appropriate cryptographic mutual key agreement protocol.

The present invention concerns also a set of cryptographic tokens that embed a corresponding arbitrary cryptographic algorithm aimed at being used together and located at each end of a point-to-point connection in order to secure said connection without requiring any key management from a system using said set since the algorithms in both tokens match.

The present invention concerns also a a set of cryptographic tokens that embed a corresponding arbitrary cryptographic algorithm aimed at being located at each end of a point-to-point connection in order to secure said connection without requiring any key management, the user knowing that the algorithms in both tokens match without knowing the algorithms themselves.

The algorithm and the protections used by one couple of devices are secret.

All the tokens of the set are manufactured, distributed, sold and/or installed together.

According to one form of realization, the algorithm and the key may be realized in hardware and can not be read, except when used; during factory/user personalization of tokens, fuses are blown to modify the embedded key: no trace of said key should be kept by the manufacturer.

According to another form of realization, the algorithm and the key are realized in software and contain appropriate hardware and software countermeasures against side channel and perturbation attacks.

The set of tokens comprises two or more tokens allowing securing point-to-point connections at both ends of which are located two of said tokens.

According to a form of realization of the present invention, each token has an internal or external embodied sign that indicate or certify its origin, warranty attached, security methods or algorithms contained, patents used, fraud resilience and tamper-resistance methods implemented, or/and a label or certification level obtained from some certification or evaluation body. Said sign may for example attest its authenticity and/or explicit security credentials in order to build trust in the security of the tokens and/or allow a differentiation on security for the same functionality. For example, the serial number/brand name of the user token gives him confidence in the other token's security, fraud resilience and tamper resistance, without ever seeing the second token.

According to a particular implementation of the present invention, the tokens contain algorithms so that both tokens are used to encrypt/decrypt and/or sign messages/check signatures and/or generate authentication tags/verify said authentication tag.

According to another particular implementation of the present invention, the tokens contain algorithms so that only one of the tokens is used to encrypt or decrypt and/or sign messages or check signatures and/or generate or verify authentication tags, and the other is the only token capable of respectively decrypt or encrypt and/or verify said signatures or sign messages and/or verify or generate authentication tag.

According to a particular form of realization, one of the tokens can encrypt some biometric data from a sensor connected directly to the token under the control of the user, and the other token is used on a remote location to verify this biometric data against related data from a database entry.

According to a form of realization, the algorithm in said tokens is stored or/and implemented using specific software and/or hardware implementation techniques designed to protect the implementation against side channel and/or perturbation attacks.

According to a particular application of the present invention, the tokens are in the form of SIM cards to be inserted in an arbitrary compatible device. According to another application, the token is in the form of USB tokens.

According to a particular form of realization, the tokens form electronic parts for soldering.

According to a particular algorithm, the tokens are capable of real-time sequence generation based on external/internal clock for stream generation.

According to a particular algorithm, the cryptographic algorithms implemented are asymmetric.

The tokens may have one of their functions permanently and irreversibly disabled at user's wish.

According to particular implementations:
- The encryption cryptographic scheme is an involution, ie encryption and decryption functions are identical;
- The encrypted text includes parity check bits;
- The number of queries to the token may be limited by an internal counter;
- The tokens are able of erasing or destroying their contents if they detect intrusion or an interactive attacker;
- The tokens have the same or almost the same functionality implemented in two or more different ways, thus enabling intrusive distinguishing the devices and traitor tracing;
- The tokens respond differently to some very special messages to be encrypted/decrypted, thus enabling non intrusive distinguishing the devices and traitor tracing.

## Claims

1. Method for securing a point to point connection consisting in using a set of tokens **characterised in that** it consists in providing both ends of said connection with said tokens for both of which the user knows they comprise corresponding cryptographic algorithms without knowing the algorithms themselves in order to secure said connection without requiring any key management.

2. Method for securing a point to point connection consisting in using a set of tokens that embed a corresponding cryptographic algorithm **characterized in that** it consists in using said tokens together at both ends of said connection in order to secure said connection without requiring any key management from a system using said set since the algorithms in both tokens match.

3. Method according to one of the claims 1 or 2, **characterised in that** it allows, on demand, to execute a pairing procedure consisting in regenerating the cryptographic algorithm(s) of said tokens in such a way that their functionalities remain identical.

4. A set of tokens that embed a corresponding cryptographic algorithm aimed at being used together and located at each end of a point-to-point connection in order to secure said connection without requiring any key management from a system using said set since the algorithms in both tokens match.

5. A set of tokens that embed a corresponding cryptographic algorithm aimed at being located at each end of a point-to-point connection in order to secure said connection without requiring any key management, the user knowing that the algorithms in both tokens match without knowing the algorithms themselves.

6. A set of tokens according to one of claims 4 or 5, **characterized in that** all the tokens of the set are manufactured, distributed, sold and/or installed together.

7. A set of tokens according to one of the claims 4 to 6, **characterized in that** it comprises two or more tokens allowing to secure point to point connections at both ends of which are located two of said tokens.

8. A set of tokens according to one of claims 4 to 7, **characterized in that** each token has one or several internal or external embodied sign(s) that indicate or certify its origin, pairing, warranty attached, security methods or algorithms contained, patents used, fraud resilience and tamper-resistance methods implemented, or/and a label or certification level obtained from some certification or evaluation body.

9. A set of tokens according to one of the claims 4 to 8, **characterized in that** the tokens contain algorithms so that both tokens are used to encrypt/decrypt and/or sign messages/check signatures and/or generate authentication tags/verify said authentication tag.

10. A set of tokens according to one of the claims 4 to 9, **characterized in that** the tokens contain algorithms so that only one of the tokens is used to encrypt or decrypt and/or sign messages or check signatures and/or generate or verify authentication tags, and the other is the only token capable of respectively decrypt or encrypt and/or check said signatures or sign messages and/or verify or generate authentication tag.

11. A set of tokens according to one of the claims 4 to 10, **characterized in that** the algorithm is stored or/and implemented using specific software and/or hardware implementation techniques designed to protect the implementation against side channel and/or perturbation attacks.
